# EUROPÄISCHE PATENTSCHRIFT

(11) **EP 0 974 510 B1**
(45) Veröffentlichungstag und Bekanntmachung des Hinweises auf die Patenterteilung: **29.05.2002**
(21) Anmeldenummer: 99108301.5
(22) Anmeldetag: 28.04.1999
(51) Int. Cl.: B62D 55/10

(54) **Gleiskettenfahrzeug**
Crawler track vehicle
Véhicule à chenilles

(30) Priorität: 23.07.1998 DE 19833154
(43) Veröffentlichungstag der Anmeldung: 26.01.2000
(73) Patentinhaber: Rheinmetall Landsysteme GmbH, 24159 Kiel (DE)
(72) Erfinder: Zonak, Armin, 24147 Kiel (DE); Böttcher, Ralf, 24107 Kiel (DE)
(74) Vertreter: Hansmann, Dierk, Dipl.-Ing.

(56) Entgegenhaltungen:
- EP-A- 0 479 016
- EP-A- 0 723 905
- DE-A- 3 725 920

## Beschreibung

Die Erfindung bezieht sich auf ein Gleiskettenfahrzeug bestehend aus einem Fahrzeuggehäuse und je einem an den beiden Seitenwänden angetriebenen Laufwerk mit einem Leitrad, Laufrollen mit Tragarmen, Stützrollen und einem mit der Gleiskette in Eingriff stehendem Triebrad, wobei Laufwerk und Fahrzeuggehäuse unter Zwischenschaltung schwingungsdämpfenden Materials miteinander verbunden sind.

Bei militärischen Kettenfahrzeugen besteht das Problem, daß Schwingungen, die beim Fahren prinzipiell in der Kette und den Laufwerksteilen erzeugt werden, über die Laufwerksaufhängung an der Fahrzeugwanne auf das gesamte Fahrzeug und somit auf die Fahrzeugbesatzung im Fahrzeuggehäuse übertragen werden.

Diese Vibrationen und Schwingungen beeinträchtigen nicht nur die Leistungsfähigkeit der Besatzung sondern führen auch zu Leistungseinbußen bei den eingebauten Beobachtungs- und Elektronikgeräten bzw. es müssen diese Geräte durch zusätzliche Einbauelemente besonders gegen Vibrationen und Schockeinwirkungen geschützt werden.

Zusätzlich führen starke Fahrgeräusche auch zu einer nicht wünschenswerten Geräuschdetektion eines Kettenfahrzeugs von außen.

Um Schwingungen zu vermeiden und zu dämpfen ist es nach der DE 37 25 920 C2 bekannt, ein entkoppeltes Laufwerk anzuordnen und das Fahrzeuggehäuse mittels dauerelastischem Material mit dem Laufwerk zu verbinden.

Weiterhin ist nach der DE 41 23 778 C2 ein Gleiskettenfahrzeug bekannt, bei dem die beiden Gleiskettenlaufwerkshälften links und rechts mittels schwingungsdämpfendem Material an der Seitenwand der Fahrzeugwanne befestigt werden und die beiden Laufwerksträger mittels Zug- und Druckstreben miteinander verbunden sind.

Grundsätzlich besteht bei den bekannten Anordnungen das Problem, die Endantriebe mit dem im Fahrzeugbug oder Fahrzeugheck befindlichen .Fahrzeugantrieb mit den Kettenrädern zu verbinden und schwingungstechnisch vom Fahrzeuggehäuse, in dem die Endantriebe befestigt sind, zu entkoppeln.

Die Aufgabe der Erfindung ist es, bei einer gattungsgemäßen in der DE 37 25 920 C2 beschriebenen Anordnung auch die Antriebe vor dem Fahrzeuggehäuse zu entkoppeln und einen Laufwerksträger als autarke Einheit mit großer Steifigkeit und Masse auszubilden.

Die Lösung dieser Aufgabe erfolgt erfindungsgemäß dadurch, daß das Laufwerk über ein u-förmiges Brückenelement mit seitlichen Laufwerksträgern und einer verbindenden Bodenplatte aufgenommen ist sowie die seitlichen Laufwerksträger jeweils als Kettenantrieb einen elektrischen Antriebsmotor aufweisen und daß das Fahrzeuggehäuse in das Brückenelement über schwingungsdämpfende Elemente eingehängt ist.

Hierdurch wird eine Schwingungseinbringung vom Laufwerk und Antriebsmotor auf das Fahrzeuggehäuse durch die außenliegenden elektrischen Antriebsmotoren als Endantriebe am Kettenantriebsrad verhindert. Ferner wird die Festig- und Steifigkeit des schwingenden Kettenantriebes durch Einbeziehung des Endantriebs vergrößert.

Weitere vorteilhafte Ausbildungen sind durch die Merkmale der Unteransprüche gekennzeichnet. Hierbei wird vorteilhaft folgendes erzielt:
- Vergrößerung der schwingenden Masse mit Verbesserung des Schwingungsverhalten;
- Erhöhung des Minen- und Schockschutzes zusätzlich mit einem Zwischenraum zur Entkopplung der Schockeinleitung;
- Unterbringung der elektrischen Energieerzeuger mit Dieselmotor und Generator außerhalb des Fahrzeuggehäuses zwischen den Laufwerkshälften;
- Verbesserung von Schutzmöglichkeiten für die Besatzung im Fahrzeuggehäuse durch zusätzlichen ballistischen Schutz in den Kettenschultern und frontal in der vorderen Verbindung der Laufwerkshälften mit Ausbildung eines Stau- und Motorraums.

In der Zeichnung ist ein Ausführungsbeispiel der Erfindung schematisch dargestellt. Es zeigen:

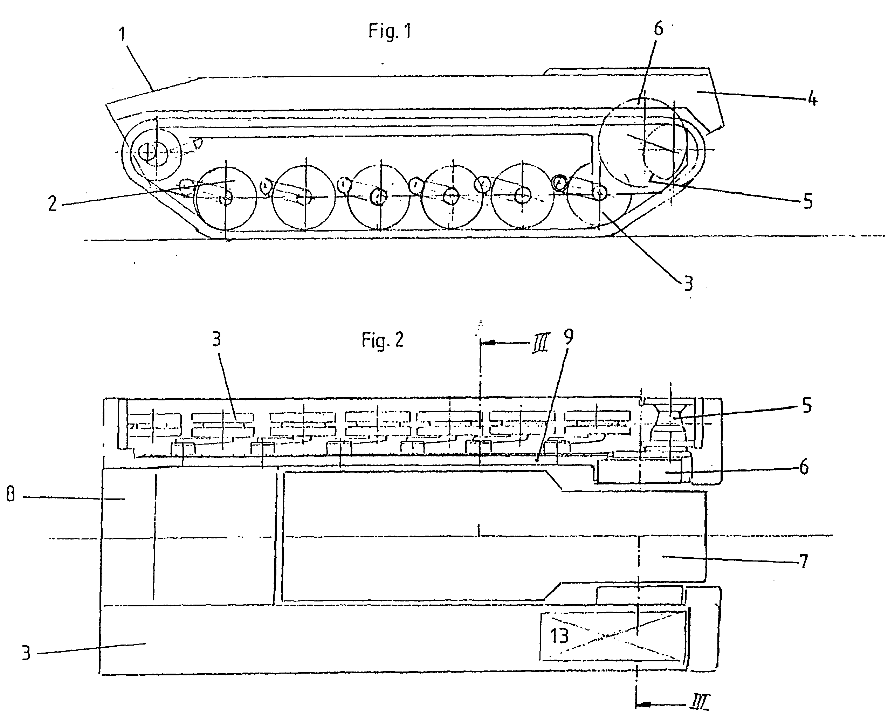

- Fig. 1: eine Seitenansicht eines Gleiskettenfahrzeuges,
- Fig. 2: eine Draufsicht gemäß Fig. 1, teilweise im Schnitt und

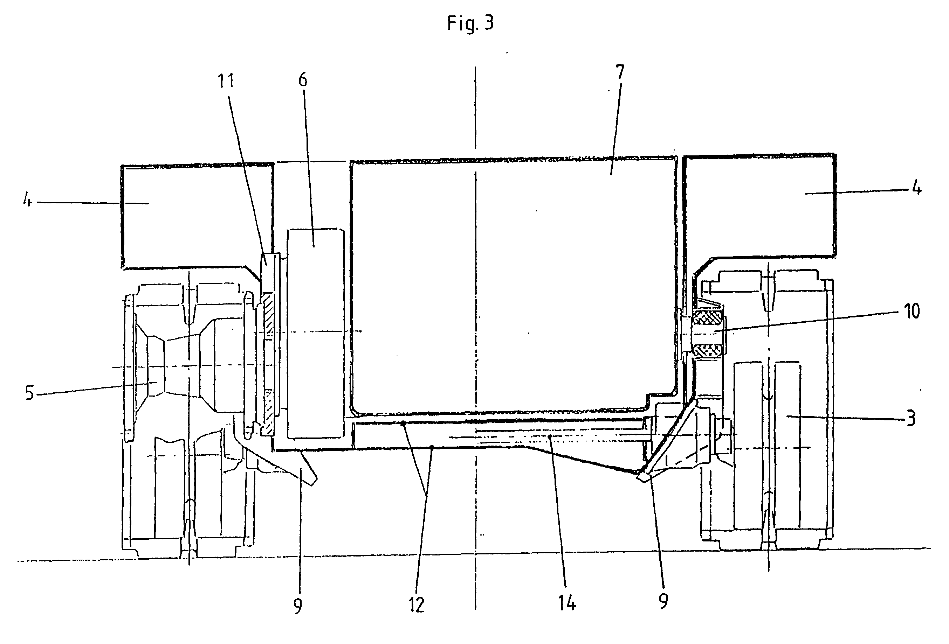

- Fig. 3: einen Schnitt gemäß Linie III-III der Fig. 2.

Das dargestellte Gleiskettenfahrzeug 1 besteht aus seitlichen Laufwerksträgern 9, die durch eine Bodenplatte 12 verbunden sind und ein u-förmiges Brückenelement bilden. In dieser Anordnung wird ein Fahrzeuggehäuse 7 aufgenommen. An den Laufwerksträger 9 sind Leiträder, Laufrollen mit Tragarm 3, Stützrollen und an jeder Seite ein mit der Gleiskette in Eingriff stehendes Triebrad 5 zur Ausbildung eines Laufwerks in bekannter Weise angeordnet.

Das Triebrad 5 bildet dabei mit einem elektrischen Antriebsmotor 6 eine Einheit und wird über eine Lagerplatte 11 im Laufwerksträger 9 gehalten. Oberhalb der Gleiskette sind als Kettenschulter über die Fahrzeuglänge nutzbare Gehäuse 4 angeordnet, die mit den Laufwerksträgern 9 eine bauliche Einheit bilden. In diesem als Kettenschulter ausgebildeten Gehäuse 4 sind in diesem Fall Energiekomponenten 13 untergebracht.

Gegebenenfalls sind auf der vorderen Querverbindung 8 zwischen den Laufwerksträgern 9 Energieerzeugungskomponenten, wie Dieselmotor und elektrischen Generator, angeordnet.

Das zentral aufgenommene Fahrzeuggehäuse 7 ist beiderseits über eine Vielzahl elastischer Lager 10 mit den Laufwerksträgern 9 und den Tragarmen 3 verbunden. Jedes Lager 10 ist dabei als Bolzenlagerung ausgebildet, wobei am Fahrzeuggehäuse 7 befestigte Bolzen von einem ringförmigen Gummikörper umschlossen und über ringförmige Außengehäuse im Laufwerksträger 9 befestigt sind.

Die Bodenplatte 12 ist als Doppelboden ausgebildet, um gleichzeitig als Minenschutz zu dienen. Der dabei gebildete Aufnahmeraum, dient zur Aufnahme von querverlaufenden Drehstäben 14 für die Federung der Laufrollen.

## Patentansprüche

1. Gleiskettenfahrzeug bestehend aus einem Fahrzeuggehäuse (7) und je einem an den beiden Seitenwänden angetriebenen Laufwerk mit einem Leitrad, Laufrollen mit Tragarmen, Stützrollen und einem mit der Gleiskette in Eingriff stehendem Triebrad (5), wobei Laufwerk und Fahrzeuggehäuse unter Zwischenschaltung schwingungsdämpfenden Materials miteinander verbunden sind, **dadurch gekennzeichnet, daß** das Laufwerk über ein u-förmiges Brückenelement mit seitlichen Laufwerksträgern (9) und einer verbindenden Bodenplatte (12) aufgenommen ist sowie die seitlichen Laufwerksträger (9) jeweils als Kettenantrieb einen elektrischen Antriebsmotor (6) aufweisen und daß das Fahrzeuggehäuse (7) in das Brückenelement über schwingungsdämpfende Elemente (10) eingehängt ist.

2. Gleiskettenfahrzeug nach Anspruch 1, **dadurch gekennzeichnet, daß** der Kettenantrieb (5) mit dem elektrischen Antriebsmotor (6) eine verbundene Einheit bildet und am Laufwerksträger (9) angeordnet ist, wobei diese Einheit gegenüber dem Fahrzeuggehäuse (7) frei beweglich ist.

3. Gleiskettenfahrzeug nach Anspruch 1 oder 2, **dadurch gekennzeichnet, daß** das Fahrzeuggehäuse (7) mit den seitlichen Laufwerksträgern (9) über mehrere elastische Lager (10) verbunden und jedes Lager (10) als Bolzenlagerung ausgebildet ist, wobei am Fahrzeuggehäuse (7) befestigte Bolzen von einem elastischen ringförmigen Gummikörper umschlossen und über ringförmige Außengehäuse im Laufwerksträger (9) befestigt sind.

4. Gleiskettenfahrzeug nach einem der Ansprüche 1 bis 3, **dadurch gekennzeichnet, daß** oberhalb der Ketten Kettenschultern über die Fahrzeuglänge am Laufwerksträger (9) als nutzbare Gehäuse (4) angeordnet sind und mit den Laufwerksträgern (9) eine bauliche Einheit bilden.

5. Gleiskettenfahrzeug nach einem der Ansprüche 1 bis 4, **dadurch gekennzeichnet, daß** die Bodenplatte (12) als doppelter Boden zum Minenschutz ausgebildet ist und einen Aufnahmeraum zur Aufnahme von Drehstäben (14) zur Federung von Laufrollenschwingarmen enthält

6. Gleiskettenfahrzeug nach einem der Ansprüche 1 bis 5, **dadurch gekennzeichnet, daß** die Bodenplatte (12) im Frontbereich (9) des Fahrzeuges einen Einbauraum für Energieerzeugungskomponenten, wie Dieselmotor und elektrischen Generator, aufweist.

7. Gleiskettenfahrzeug nach Anspruch 6, **dadurch gekennzeichnet, daß** die Ausbildung des Einbauraumes für Energieerzeugerkomponenten und die seitliche Ausbildung der Kettenschultern (4) mit Laufwerksträger (9) zusätzlich frontale und seitliche Schutzelemente für das innenliegende Fahrzeüggehäuse (7) aufweist.

## Claims

1. Crawler track vehicle consisting of a vehicle housing (7) and a driven running gear on each of the two side walls with an idler, track rollers with brackets, track supporting rollers and a driving gear (5) that is in engagement with the crawler chain, the running gear and vehicle housing being connected to one another with vibration-damping material arranged in between, **characterized in that** the running gear is taken up via a U-shaped bridge element with lateral running gear supports (9) and a connecting bottom plate (12) and the lateral running gear supports (9) have an electric drive motor (6) as a chain drive in each case, and that the vehicle housing (7) is hung in the bridge element via vibration-damping elements (10).

2. Crawler track vehicle according to claim 1, **characterized in that** the chain drive (5) with the electric drive motor (6) forms a combined unit and is disposed on the running gear support (9), this unit being freely movable compared with the vehicle housing (7).

3. Crawler track vehicle according to claim 1 or 2, **characterized in that** the vehicle housing (7) is connected to the lateral running gear supports (9) via a plurality of elastic bearings (10) and each bearing (10) is formed as a pin suspension, pins attached to the vehicle housing (7) being surrounded by an elastic annular rubber body and being attached to the running gear support (9) via an annular outer casing.

4. Crawler track vehicle according to one of claims 1 to 3, **characterized in that** chain shoulders are arranged above the chains over the length of vehicle on the running gear support (9) as a usable housing (4) and form a structural unit with the running gear supports (9).

5. Crawler track vehicle according to one of claims 1 to 4, **characterized in that** the bottom plate (12) is formed as a double bottom for protection against mines and contains a receiving space for accommodating torsion bars (14) for cushioning track roller swing arms.

6. Crawler track vehicle according to one of claims 1 to 5, **characterized in that** the bottom plate (12) has an incorporated space in the front area (9) of the vehicle for energy-generating components, such as a diesel engine and electric generator.

7. Crawler track vehicle according to claim 6, **characterized in that** the formation of the incorporated space for energy-generating components and the lateral formation of the chain shoulders (4) with running gear supports also has frontal and lateral protection elements for the vehicle housing (7) lying inside.

## Revendications

1. Véhicule à chenilles composé d'une carrosserie (7) et d'un train de roulement entraîné et monté contre chacune des deux parois latérales avec une roue de guidage, des galets de roulement à bras porteurs, des galets supports et une roue motrice (5) engrenée avec la chenille, le train de roulement et la carrosserie étant reliés l'un à l'autre par l'intermédiaire d'éléments amortisseurs, **caractérisé en ce que** le train de roulement est monté via un élément de pont en forme de U avec supports de roulement (9) latéraux et plaque de base (12) de liaison, **en ce que** les supports de train de roulement (9) latéraux présentent, en tant qu'entraînement pour la chaîne, un moteur de commande (6) électrique, et **en ce que** la carrosserie est suspendue dans l'élément de pont via des éléments amortisseurs de vibrations (10).

2. Véhicule à chenilles conforme à la revendication 1, **caractérisé en ce que** l'entraînement des chaînes (5) forme un seul bloc avec le moteur de commande (6) électrique et est disposée contre le support de train de roulement (9), le bloc pouvant se mouvoir indépendamment de la carrosserie (7).

3. Véhicule à chenilles conforme à la revendication 1 ou 2, **caractérisé en ce que** la carrosserie (7) est reliée aux supports de trains de roulement (9) latéraux par l'intermédiaire de plusieurs paliers élastiques et **en ce que** chaque palier (10) se présente sous la forme d'un support à boulons, les boulons fixés à la carrosserie (7) étant entourés d'un corps en caoutchouc annulaire élastique et fixés au support de train de roulement (9) par l'intermédiaire d'un boîtier extérieur annulaire.

4. Véhicule à chenilles conforme à l'une des revendications 1 à 3, **caractérisé en ce que** des épaulements sont disposés comme des boîtiers (4) utiles au-dessus des chaînes, contre le support de train de roulement et sur toute la longueur du véhicule et forment une seule unité structurale avec les supports de train de roulement (9).

5. Véhicule à chenilles selon une des revendications 1 à 4, **caractérisé en ce que** la plaque de base (12) a se présente sous la forme d'un double plancher destiné à protéger des mines et contient un espace de réception de barres de torsion (14) pour la suspension élastique des bras basculants des galets de roulement.

6. Véhicule à chenilles selon une des revendications 1 à 5, **caractérisé en ce que** la plaque de base (12) présente, dans la zone frontale (9) du véhicule, un espace encastré destiné aux composants de production d'énergie, comme le moteur diesel et le générateur électrique.

7. Véhicule à chenilles selon la revendication 6, **caractérisé en ce que** la configuration de l'espace encastré destiné aux composants de production d'énergie et la configuration latérale des épaulements (4) avec supports (9) de roulement présentent des éléments frontaux et latéraux supplémentaires destinés à protéger la carrosserie.
